# EUROPEAN PATENT APPLICATION

(11) **EP 4 650 251 A1**
(43) Date of publication of application: **19.11.2025**
(21) Application number: 25174681.4
(22) Date of filing: 07.05.2025
(51) Int. Cl.: B62D 25/08

(54) **FRAME MEMBER FOR VEHICLE**

(30) Priority: 14.05.2024 JP 2024078783
(71) Applicant: MAZDA MOTOR CORPORATION, Hiroshima 730-8670 (JP)
(72) Inventor: Kuroki, Yui, Aki-gun, Hiroshima, 730-8670 (JP); Kanamaru, Daisuke, Aki-gun, Hiroshima, 730-8670 (JP); Taniguchi, Nobutaka, Aki-gun, Hiroshima, 730-8670 (JP)
(74) Representative: Lorenz Seidler Gossel Part. mbB

(57) **Abstract**

A frame member comprises a frame body portion (20A) having an upper wall portion (20a), a lower wall portion (20b), and a pair of side wall portions (20c, 20d), which together define a closed-cross section (7a) perpendicular to a longitudinal extension direction in a specified longitudinal range, a pair of groove portions (25, 26) formed at the pair of side wall portions (20c, 20d), the groove portions (25, 26) being recessed toward an inside of the closed-cross section (7a), flanges (20e, 20f) protruding outward from the closed-cross section (7a). Each of the pair of side wall portions (20c, 20d) comprises plural side wall portions (25a, 26a, 25b, 26b, 25c, 26c) which include a groove-upper wall portion (25a, 26a) extending in a width direction at an upper side thereof, a groove-lower wall portion (25b, 26b) extending in the width direction at a lower side thereof and facing the groove-upper wall portion (25, 26a), and a groove-bottom wall portion (25c, 26c) interconnecting the groove-upper wall portion (25a, 26a) and the groove-lower wall portion (25b, 26b) in a vertical direction. The plural side wall portions may have substantially the same bending rigidity.

## Description

### BACKGROUND OF THE INVENTION

The present invention relates to a frame member for a vehicle, and to a vehicle comprising such a frame member.

JP 2009-166697 A discloses a frame member for a vehicle which extends in a vehicle longitudinal direction and comprises an inner panel having a hat-shaped cross section perpendicular to an extension direction thereof which is open to an outward side, in a vehicle width direction, thereof and an outer panel having another hat-shaped cross section perpendicular to the extension direction which is open to an inward side, in the vehicle width direction, thereof, wherein respective upper-and-lower flanges of the inner panel and the outer panel are joined together in the vehicle width direction, thereby forming a close-cross section perpendicular to the extension direction of the frame member.

In the frame member for the vehicle of the above-described patent document, since the flanges are offset toward the outward side, in the vehicle width direction, thereof, the resistance against buckling of the outer panel is higher than that of the inner panel. Accordingly, when a collision load of the vehicle is applied from one side of the longitudinal direction, the inner panel tends to have the buckling easier than the outer panel. Consequently, when the collision load is applied, the frame member for the vehicle is not axially-compressed uniformly, so that the collision load cannot be absorbed expectedly.

### SUMMARY OF THE INVENTION

An object of the present invention is to provide a frame member for a vehicle which can properly absorb the collision load expectedly by its uniform axial compression when the collision load is applied.

The present invention is a frame member for a vehicle, comprising a frame body portion having an upper wall portion, a lower wall portion, and a pair of side wall portions, which together define a closed-cross section perpendicular to a longitudinal extension direction thereof in a specified longitudinal range, a pair of groove portions formed at the pair of side wall portions, the groove portions being recessed toward an inside of the closed-cross section, flanges protruding outward from the closed-cross section, wherein each of the pair of side wall portions comprises plural side wall portions which include a groove-upper wall portion extending in a width direction at an upper side thereof, a groove-lower wall portion extending in the width direction at a lower side thereof and facing the groove-upper wall portion, and a groove-bottom wall portion interconnecting the groove-upper wall portion and the groove-lower wall portion in a vertical direction. The plural side wall portions can be configured to have substantially the same bending rigidity.

If the plural side wall portions forming the pair of side wall portions have substantially the same bending rigidity, a difference, in the vehicle width direction, of the buckling resistance of the frame member against the load applied to the frame member in the longitudinal direction can be suppressed. Consequently, when the collision load is applied to the frame member, the frame member can be easily axially-compressed with a stable movement, so that the collision load can be absorbed by the frame member expectedly. Further, compared to a case where no groove portion is provided, the moment of inertia (of area) of the frame member is made so large that the buckling resistance can be properly large.

As described above, the present invention can provide the frame member for the vehicle which can properly absorb the collision load expectedly by its uniform axial compression when the collision load is applied.

The present invention will become apparent from the following description which refers to the accompanying drawings.

### BRIEF DESCRIPTION OF THE DRAWINGS

FIG. **1** is a plan view of a front vehicle-body structure provided with a frame member for a vehicle according to an embodiment of the present invention.
FIG. **2** is a side view of the front vehicle-body structure.
FIG. **3** is a perspective view of the frame member for the vehicle alone.
FIG. **4** is a sectional view schematically showing a cross section of the frame member for the vehicle taken along line IV-IV of FIG. **3****.**
FIG. **5** is a sectional view of the frame member for the vehicle taken along line V-V of FIG. **3****.**
FIG. **6** is a sectional view schematically showing the cross section of the frame member for the vehicle taken along line VI-VI of FIG. **3****.**
FIG. **7** is a partially-enlarged view of a surrounding area of a suspension housing of the front vehicle-body structure.
FIG. **8** is a partially-enlarged view of a connecting member to connect the frame member for the vehicle and a subframe, and its surrounding area.
FIG. **9** is a sectional view schematically showing a cross section of a first modification of the frame member for the vehicle.
FIG. **10** is a sectional view schematically showing a cross section of a second modification of the frame member for the vehicle.

### DETAILED DESCRIPTION OF THE INVENTION

Hereafter, embodiments of the present invention will be described referring to the accompanying drawings.

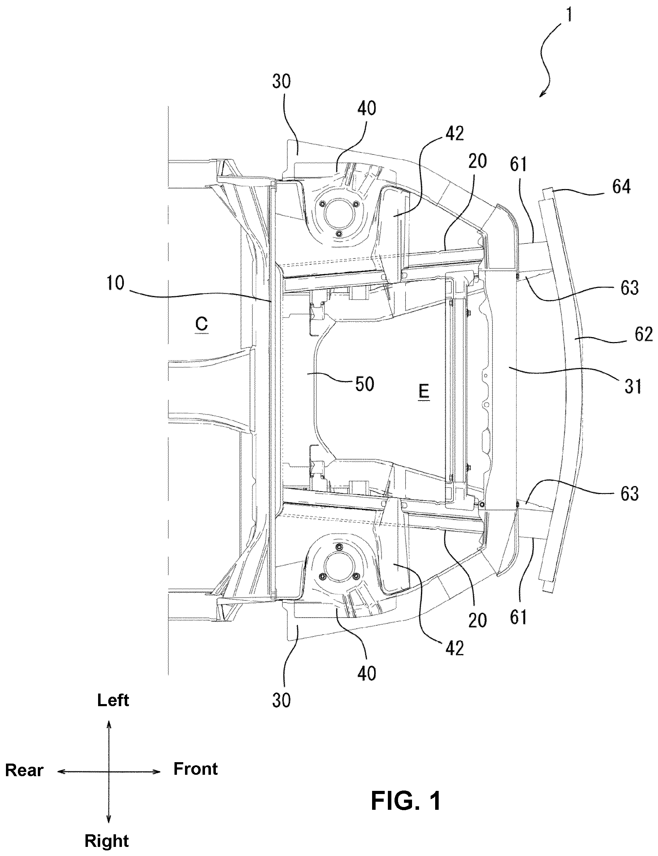

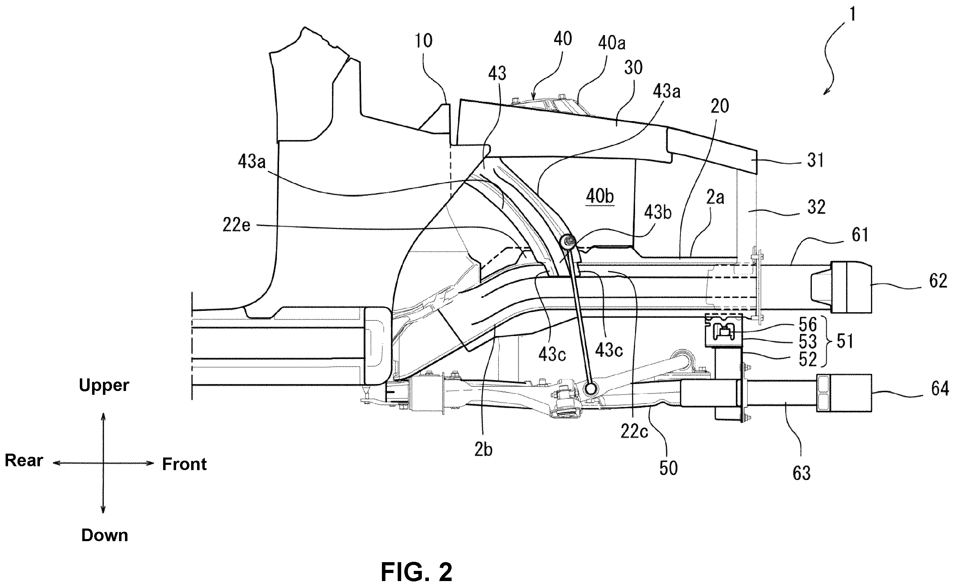

FIGS. **1** and **2** show a front vehicle-body structure **1** of a vehicle which is provided with a frame member according to an embodiment of the present invention. As shown in FIGS. **1** and **2****,** the front vehicle -body structure **1** comprises a dash panel **10** which partitions a cabin **C** from an engine room **E,** a pair of right-and-left front side frames **20** which extend forward from the dash panel **10,** and a pair of right-and-left apron reinforcements **30** which extend toward a front side of the dash panel **10** on an outward side, in a vehicle width direction, and above the front side frame **20.** The apron reinforcement **30** is connected to a shroud upper **31** extending in the vehicle width direction.

The front vehicle -body structure **1** further comprises a pair of right-and-left shroud members **32** which connect the shroud upper **31** and respective front ends of the front side frames **20** in a vertical direction, a pair of right-and-left suspension housings **40** which are arranged between the dash panel **10** and the shroud members **32,** a subframe **50** which is arranged below the front side frames **20,** and a pair of right-and-left connecting members **51** which connect the subframe **50** and the front side frames **20** in the vertical direction.

A main crash can **61,** which is made of a cylindrical member or the like to absorb a collision load applied from a vehicle forward side, extends forward at each front end of the front side frames **20.** A pair of right-and-left main crash cans **61** are interconnected by a bumper reinforcement **62** which extends in the vehicle width direction. A sub crash can **63,** which is made of another cylindrical member or the like to absorb the collision load applied from the vehicle forward side, extends forward at each front end of the subframe **50.** A pair of right-and-left sub crash cans **63** are interconnected by a sub bumper reinforcement **64** which extends in the vehicle width direction.

As shown in FIG. **2****,** the front side frame **20** includes a straight portion **2a** which forward extends roughly horizontally and an inclined portion **2b** which extends obliquely downward- and-reward from a rear end of the straight portion **2a.**

When the collision load is applied to the bumper reinforcement **62** from the vehicle forward side, the main crash can **61** and the front side frame **20** absorb part of the collision load and the rest of the collision load is dispersed to a rear-side vehicle-body frame.

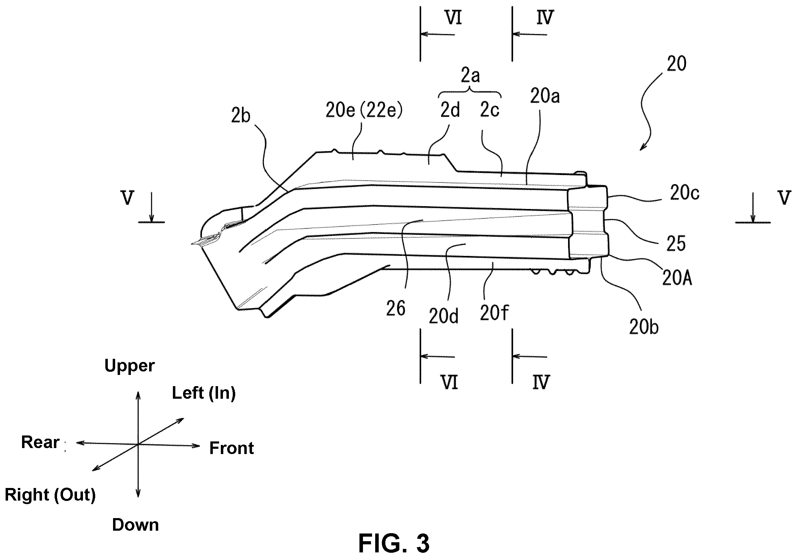

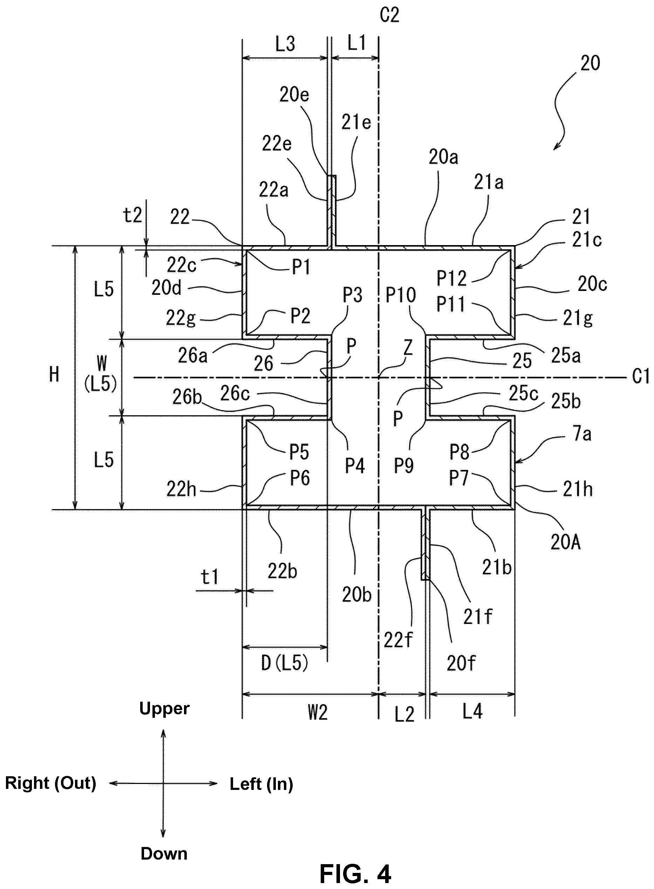

FIG. **3** is a perspective view of the front side frame **20** alone. FIG. **4** is a sectional view schematically showing a cross section (a cross section of a front-side portion **2c** of the straight portion **2a** of the front side frame **20**) taken along line IV-IV of FIG. **3****.** In the present embodiment, the right-and-left front side frames **20** has substantially a laterally-symmetrical structure. Accordingly, a structure of the right-side front side frame **20** will be described only.

Referring to FIGS. **3** and **4****,** the front side frame **20** is configured to absorb the collision load by its axial compression when the collision load is applied in the vehicle longitudinal direction. The front side frame **20** is made from iron, aluminum or the like, for example. The front side frame **20** comprises an upper wall portion **20a,** a lower wall portion, and a pair of side wall portions **20c, 20d,** so that it includes plural vertexes and a frame body portion **20A** which has a closed-cross section **7a** perpendicular to its extension direction. The front side frame **20** is provided with groove portions **25, 26** which are recessed toward an inside of the closed-cross section **7a** at the respective side wall potions **20c, 20d.** The groove portions **25, 26** extend in the longitudinal direction. The front side frame **20** has an upper flange **20e** and a lower flange **20f,** which respectively protrude outward (in the vertical direction in the present embodiment) from the closed-cross section **7a.**

As shown in FIG. **4****,** the front side frame **20** is formed by welding plural sheets of plate member, for example. In the present embodiment, the front side frame **20** comprises an inner panel **21** positioned on the inward side, in the vehicle width direction, thereof and an outer panel **22** positioned on the outward side, in the vehicle width direction, thereof.

The inner panel **21** comprises an inner upper-wall portion **21a** extending in the vehicle width direction, an inner lower-wall portion **21b** extending in the vehicle width direction, facing the inner upper-wall portion **21a,** an inside wall portion **21c** interconnecting respective inner ends of the inner upper-wall portion **21a** and the inner lower-wall portion **21b,** and upper-and-lower flanges **21e, 21f** which extend in the vertical direction from respective outer ends of the inner upper-wall portion **21a** and the inner lower-wall **21b.** Its cross section perpendicular to the extension direction is of a hat shape protruding inward in the vehicle width direction.

The outer panel **22** comprises an outer upper-wall portion **22a** extending in the vehicle width direction, an outer lower-wall portion **22b** extending in the vehicle width direction, facing the outer upper-wall portion **22a,** an outside wall portion **22c** interconnecting respective outer ends of the outer upper-wall portion **22a** and the outer lower-wall portion **22b,** and upper-and-lower flanges **22e, 22f** which extend in the vertical direction from respective inner ends of the outer upper-wall portion **22a** and the outer lower-wall **22b.** Its cross section perpendicular to the extension direction is of another hat shape protruding outward in the vehicle width direction.

The upper flanges **21e, 22e** and the lower flanges **21f, 22f** of the inner panel **21** and the outer panel **22** are joined together in the vehicle width direction by welding, for example, so that the front side frame **20** with the roughly-rectangular closed-cross section **7a** is formed.

The upper wall portion **20a,** the lower wall portion **20b,** and the pair of side wall portions **20c, 20d** of the front side frame **20** are formed by the upper-wall portions **21a, 22a,** the lower wall portions **21b, 22b,** and the side wall portions **21c, 22c** of the inner panel **21** and the outer panel **22.** The upper flange **20e** and the lower flange **20f** of the front side frame **20** are respectively formed by the upper flanges **21e, 22e** and the lower flanges **21f, 22f** of the inner panel **21** and the outer panel **22.**

A projection position of the upper flange **20e** relative to the closed-cross section **7a** is located on either one side of an outward side and an inward side of center of gravity (figure) **Z** of the closed-cross section **7a,** and a projection position of the lower flange **20f** relative to the closed-cross section **7a** is located on the other side. In the present embodiment, the upper flange **20e** is positioned on the outward side, in the vehicle width direction, of the lower flange **20f.** Respective distances L1, L2 of the upper flange **20e** and the lower flange **20f,** in the vehicle width direction, from the center of gravity **Z** of the closed-cross section **7a** match each other substantially. In this specification, the meaning of the above-described expression: "substantially" includes a tolerance which may be generated unavoidably in manufacturing the inner panel **21** and the outer panel **22.**

In this specification, the center of gravity **Z** of the closed-cross section **7a** means an intersection of a straight line C1 which passes through the center, in the vertical direction, between the upper wall portion **20a** and the lower wall portion **20b** and a straight line C2 which passes through the center, in the vehicle width direction, between the pair of side wall portions **20c, 20d** in a cross section of a specified area of the front side frame **20** shown in FIG. **4****.** In the present embodiment, the specified area is the front-side portion **2c** of the straight portion **2a** of the front side frame **20.**

Groove portions **25, 26,** which are recessed toward an inside of the closed-cross section **7a** and extend in the vehicle longitudinal direction, are formed at the respective side wall portions **21c, 22c** of the inner panel **21** and the outer panel **22.**

As shown in FIG. **4****,** the groove portions **25, 26** are arranged at a facing position, in the vehicle width direction, thereof. In the present embodiment, the width W, in the vertical direction, of each of the groove portions **25, 26** is set at 1/3 of the height H of the closed-cross section **7a.** A center **P,** in the vertical direction, of the width W of the groove portions **25, 26** matches the straight line C1, and the groove portions **25, 26** are located at the center, in the vertical direction, of the closed-cross section **7a.**

In the present embodiment, the depth D of the groove portions **25, 26** substantially matches the width W of the groove portions **25, 26.** The depth D of the groove portions **25, 26** is set to be smaller than the distance W2, in the vehicle width direction, between the side wall portions **20c, 20d** and the center of gravity **Z.** The groove portions **25, 26** are positioned on the outward side of the straight line C2 which extends in the vertical direction, passing through the center of gravity D. The depth D of the groove portions **25, 26** substantially matches the width L3, L4 of the outer upper-wall portion **22a** and the inner lower-wall portion **21b.**

The groove portions **25, 26** comprise groove-upper wall portions **25a, 26a** which are located at an upper side and extend in the vehicle width direction at the closed-cross section **7a,** groove-lower wall portions **25b, 26b** which are located at a lower side and extend in the vehicle width direction, facing the groove-upper wall portions **25a, 26a,** and groove-bottom wall portions **25c, 26c** which interconnect respective inner ends of the groove-upper wall portions **25a, 26a** and the groove-lower wall portions **25b, 26b** in the vertical direction.

Referring to FIG. **4****,** the side wall portion **21c** of the inner panel **21** and the side wall portion **22c** of the outer panel **22** are configured to have substantially the same bending rigidity. Specifically, the respective side wall portions **21c, 22c** of the inner panel **21** and the outer panel **22** are made of plural side wall portions having substantially the same bending rigidity, so that the respective bending rigidities of the above-described plural side wall portions are substantially the same. In the present embodiment, the above-described bending rigidity means the one for a direction perpendicular to each face of the respective side wall portions (i.e., a thickness direction of each of the side wall portions).

The plural side wall portions comprise upper side wall portions **21g, 22g** located above the respective groove portions **25, 26,** lower side wall portions **21h, 22h** located below the groove portions **25, 26,** groove-upper wall portions **25a, 26a,** groove-lower wall portions **25b, 26b,** and groove-bottom wall portions **25c, 26c,** which are provided at the respective side wall portions **21c, 22c** of the inner panel **21** and the outer panel **22.** The plural side wall portions are configured to have substantially the same plate thickness **t1** and substantially the same side length **L5** of the closed-cross section **7a.** Further, the respective upper-wall portions **22a, 21a** of the inner panel **21** and the outer panel **22** are configured to have substantially the same plate thickness **t2** and substantially the same side lengths **L4, L3** as those of the respective side wall portions.

As shown in FIG. **4****,** the closed-cross section **7a** has plural vertexes **P1** - **P12** (first - twelfth vertexes). The first vertex **P1** is an intersection of the outer upper-wall portion **22a** and the upper side wall portion **22g.** The second vertex **P2** is an intersection of the upper side wall portion **22g** and the groove-upper wall portion **26a.** The third vertex **P3** is an intersection of the groove-upper wall portion **26a** and the groove-bottom wall portion **26c.** The fourth vertex **P4** is an intersection of the groove-bottom wall portion **26c** and the groove-lower wall portion **26b.** The fight vertex **P5** is an intersection of the groove-lower wall portion **26b** and the lower side wall portion **22h.** The sixth vertex **P6** is an intersection of the lower side wall portion **22h** and the outer lower wall portion **22b.** The seventh vertex **P7** is an intersection of the inner lower-wall portion **21b** and the lower side wall portion **21h.** The eighth vertex **P8** is an intersection of the lower side wall portion **21h** and the groove-lower wall portion **25b.** The sixth vertex **P9** is an intersection of the groove-lower wall portion **25b** and the groove-bottom wall portion **25c.** The tenth vertex **P10** is an intersection of the groove-bottom wall portion **25c** and the groove-upper wall portion **25a.** The eleventh vertex **P11** is an intersection of the groove-upper wall portion **25a** and the upper side wall portion **21g.** The twelfth vertex **P12** is an intersection of the upper side wall portion **21g** and the inner upper-wall portion **21a.**

The closed-cross section **7a** is symmetrical about a point of its center of gravity **Z,** including protrusion positions of the upper-and-lower flanges **20e, 20f** and unsymmetrical about all lines which pass through the center of gravity **Z** and are perpendicular to the longitudinal direction. The above-described expression: "be symmetrical about a point of its center of gravity **Z"** means that in a case where the closed-cross section **7a** is rotated by 180 degrees around the center of gravity **Z,** the first - sixth vertexes **P1** - **P6** and the protrusion position of the upper flange **20e** substantially matches the seventh - twelfth vertexes **P7** - **P12** and the protrusion position of the lower flange **20f,** respectively.

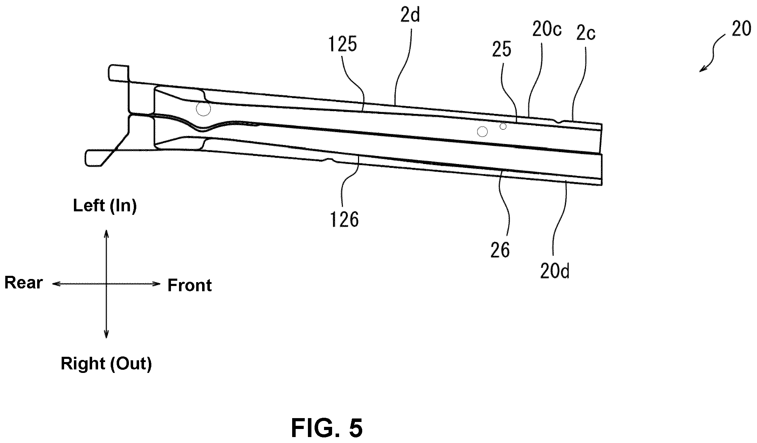

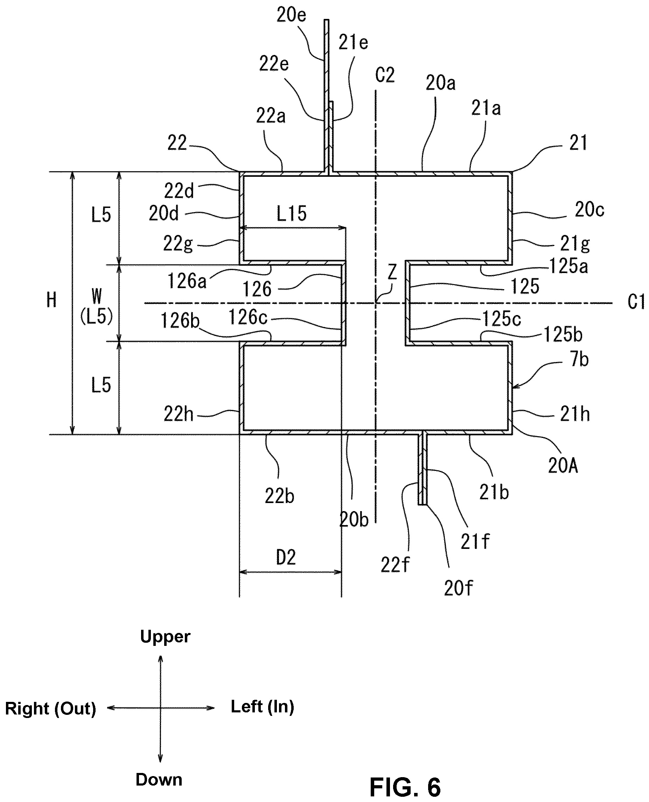

Referring to FIGS. **5** and **6****,** the depth of the groove portions **25, 26** are configured such that that of the rear-side groove portions is deeper than that of the front-side groove portions. More specifically, the depth **D2** of groove portions **125, 126** of a closed-cross section **7b** which is positioned at a rear-side portion **2d** of the front side frame **20** shown in FIG. **6** is deeper than that of the groove portions **25, 26** of the closed-cross section **7a** which is positioned at the front-side portion **2c** of the front side frame **20** shown in FIG. **4****.** The side length **L15** of groove-upper wall portions **125a, 126a** of the closed-cross section **7b** is longer than the side length **L15** of groove-bottom wall portions **125c, 126c,** the upper side wall portions **21g, 22g,** and the lower side wall portion **21h, 22h** of the closed-cross section **7b.**

As shown in FIGS. **3****,** **4** and **5****,** the upper flange **20e** of the rear-side portion **2d** of the front side frame **20** protrudes upward from the upper flange **20e** of the front-side portion **2c.** More specifically, the upper flange **22e** of the outer panel **22** is configured such that the rear-side portion **2d** is longer than the front-side portion **2c.**

Herein, in the present embodiment, as shown in FIG. **2****,** the front-side portion **2c** of the front side frame **20** is a portion of the straight portion **2a** which is positioned on the forward side of the suspension housing **40,** and the rear-side portion **2d** is another portion of the straight portion **2a** where the suspension housing **40** is attached.

As shown in FIGS. **1****,** **2** and **7****,** the suspension housing **40** is attached to the front side frame **20.** The suspension housing **40** supports an upper end of a front suspension (not illustrated) which is arranged at an appropriate position located in front of the dash panel **10.** The suspension housing **40** is provided to extend between the apron reinforcement **30** and the front side frame **20.**

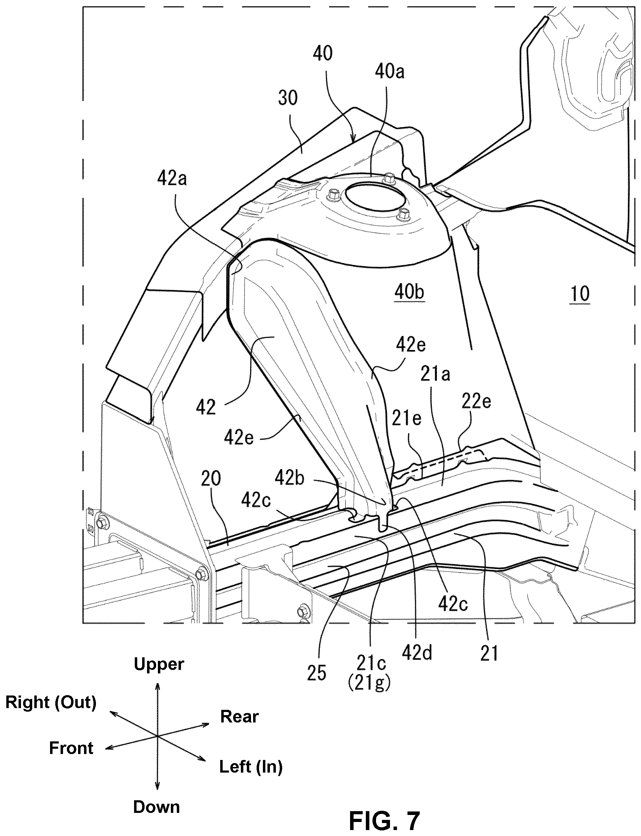

As shown in FIG. 7, the suspension housing **40** is a roughly-cone shaped cylindrical member with a disc-shaped upper face. The suspension housing **40** comprises a roughly disc-shaped suspension-top support portion **40a** to support the suspension and a tower portion **40b** which expands downward from the suspension-top support portion **40a.** The suspension-top support portion **40a** is fixed to an upper face portion of the apron reinforcement **30** by welding or the like.

The tower portion **40b** is configured to extend downward from an outside end portion, in a radial direction, of the suspension-top support portion **40a.** An upper end portion of the tower portion **40b** is fixed to a lower end portion of the suspension support portion **40a** and an inside face of the apron reinforcement **30** by welding or the like. A lower end portion of the tower portion **40b** is fixed to the upper flange **22e** of the outer panel **22** of the front side frame **20** by welding or the like in a state where it overlaps the upper flange **22e** from the outward side, in the vehicle width direction, thereof.

The suspension housing **40,** which has a roughly hat-shaped cross section open to the outward side, in the vehicle width direction, thereof, is arranged adjacently to a front side of the tower portion **40b,** and has a first reinforcing member **42** extending in the vertical direction. An upper end portion **42a** of the first reinforcing member **42** is joined to the front side portion of the tower portion **40b** which is fixed to an inside face of the apron reinforcement **30** by welding or the like. A lower end portion **42b** of the first reinforcing member **42** is fixed to the inner upper-wall portion **21a** and the inner side-wall portion **21c** of the inner panel **21** by welding or the like. The lower end portion **42b** of the first reinforcing member **42** is provided with an upper-face fixation potion **42c** which is fixed to the inner upper-wall portion **21a** and a side-face fixation portion **42d** which is fixed to the inner side-wall portion **21c.** A pair of flange portions **42e** of the first reinforcing member **42** which extend in the longitudinal direction are joined to a front face side of the tower portion **40b** by welding or the like.

As shown in FIG. **2****,** the suspension housing **40** comprises a second reinforcing member **43** which is arranged on the outward side, in the vehicle width direction, of the tower portion **40b.** The second reinforcing member **43** is of a roughly hat shape and extends in the vertical direction. A pair of flange portions **43a** of the second reinforcing member **43** which extend in the longitudinal direction are joined to the tower portion **40b** from the outward side, in the vehicle width direction, thereof by welding or the like. The pair of flange portions **43a** are joined to the upper flange **22e** of the outer panel **22** by welding or the like at a lower end portion **43b** of the second reinforcing member **43.** At the lower end portion **43b** of the second reinforcing member **43** is provided a side-face fixation portion **43c** which is joined to the outer side-wall portion **22c** by welding or the like.

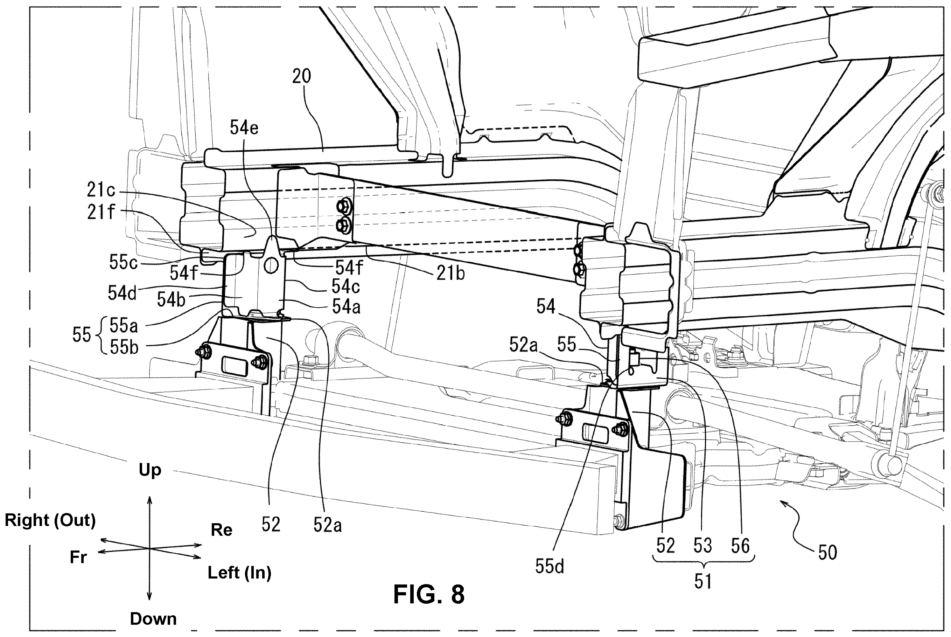

As shown in FIGS. **2** and **8****,** the subframe **50** and the front side frame **20** are connected by the connecting member **51.** The connecting member **51** comprises a lower-side connecting member **52** which is positioned below that and connected to the subframe **50,** an upper-side connecting member **53** which is positioned above that and connected to the front side frame **20,** and a fastening member **56** which fastens the lower-side connecting member **52** and the upper-side connecting member **53.**

The lower-side connecting member **52** has a roughly U-shaped cross section open to the forward side and extends in the vertical direction. The lower-side connecting member **52** is fixed to the subframe **50** by welding or the like at its lower end portion. A plate member **52a** to arrange a fastening member **54** is joined to an upper end portion of the lower-side connecting member **52.**

The upper-side connecting member **53** comprises a pole member **54** which has a roughly U-shaped cross section open to the outward side, in the vehicle width direction, thereof and an L-shaped plate member **55** which covers an outward-and-lower side of the pole member **54.**

The pole member **54** comprises an inner wall **54a** which extends in the vertical direction, a front wall **54b** and a rear wall **54c** which extend outward, the width direction, thereof from a front edge and a rear edge of the inner wall **54a,** and a pair of front-and-rear flanges **54d** which respectively extend forward and rearward from the front **wall 54b** and an outer edge of the rear wall **54c.**

The plate member **55** includes a vertical wall **55a** extending in the vertical direction and a bottom wall **55b** extending inward in the vehicle width direction, thereof from a lower end of the vertical wall **55a.** The upper-side connecting member **53** is formed in a hollow-box shape by the pair of flange portions **54d** of the pole member **54** and the vertical wall **55a** of the plate member **55** which are joined together in the width direction by welding or the like.

At the pole member **54** are provided a side-face fixation portion **54e** which extends upward from the inner wall **54a** and is fixed to the side wall portion **21c** of the inner panel **21** and a lower-face fixation portion **54f** which respectively extend forward and rearward from the front wall **54b** and an upper edge of the rear wall **54c** and is fixed to the lower wall portion **21b** of the inner panel **21.** The plate member **55** is joined to the lower flange **21f** of the inner panel **21** at the upper end portion **55c** by welding or the like.

The fastening member **56** is a weld nut and a bolt or the like which are fixed to a tongue-side portion **55d.** The tongue-side portion **55d** is made of part of a vertical wall of the plate member **55** which has been cut off and bent inward, in the vehicle width direction, thereof. The upper-side connecting member **51** and the lower-side connecting member **52** are joined together by inserting the bolt from a position below the plate member **52** and screwing the bolt into the weld nut.

The effects of the frame member **20** for the vehicle according to the above-described embodiment will be described.

The front side frame **20** extending in the longitudinal direction comprises the frame body portion **20A** having the closed-cross section **7a** perpendicular to the extension direction thereof in a specified longitudinal range, which is formed by the upper wall portion **20a,** the lower wall portion **20b,** and a pair of side wall portions **20c, 20d,** a pair of groove portions **25, 26** formed at the pair of side wall portions **20c, 20d,** the groove portions **25, 26** being recessed toward the inside of the closed-cross section **7a,** the flanges **20e, 20f** protruding outward from the closed-cross section **7a,** wherein each of the pair of side wall portions **20c, 20d** comprises the plural side wall portions which include the groove-upper wall portions **25a, 26a** extending in the vehicle width direction at the upper side thereof, the groove-lower wall portions **25b, 26b** extending in the vehicle width direction at the lower side thereof and facing the groove-upper wall portions **25a, 26a,** and the groove-bottom wall portions **25c, 26c** interconnecting the groove-upper wall portions **25a, 26a** and the groove-lower wall portions **25b, 26b** in the vertical direction, and the plural side wall portions **21g, 22g, 21h, 22h, 25a, 26a, 25b, 26b, 25c, 26c** are configured to have substantially the same bending rigidity.

According to the present invention, since the plural side wall portions **21g, 22g, 21h, 22h, 25a, 26a, 25b, 26b, 25c, 26c** of the pair of side wall portions **20c, 20d** have substantially the same bending rigidity, a difference, in the vehicle width direction, of the buckling resistance of the front side frame **20** against the load applied to the front side frame **20** in the longitudinal direction can be suppressed. Consequently, when the collision load is applied to the front side frame **20,** the front side frame **20** can be easily axially-compressed with a stable movement, so that the collision load can be absorbed by the front side frame **20** expectedly. Further, compared to a case where the groove portions **25, 26** are not provided, the moment of inertia (of area) of the front side frame member **20** is made so large that the buckling resistance can be properly large.

The side wall portions **21g, 22g, 21h, 22h, 25a, 26a, 25b, 26b, 25c, 26c** are configured to have substantially the same plate thickness **t1** and substantially the same side length **L5** of the closed-cross section **7a.**

According to this structure, the respective bending rigidities of the side wall portions **21g, 22g, 21h, 22h, 25a, 26a, 25b, 26b, 25c, 26c** of the pair of side wall portions **20c, 20d** can be substantially the same.

The frame member for the vehicle is a pair of right-and-left front side frames **20** positioned on the both-side portions, in the vehicle width direction, of the engine room **E.**

According to this structure, when the collision load is applied to the front side frame **20,** the front side frame **20** can be easily axially-compressed with a stable movement.

The flanges **20e, 20f** comprise the upper flange **20e** protruding from the upper wall portion **20a** and the lower flange **20f** protruding from the lower wall portion **20b.** The upper flange **20e** is positioned on the outward side of the center of gravity **Z** of the closed-cross section **7a,** and the lower flange **20f** is positioned on the inward side of the center of gravity **Z** of the closed-cross section **7a.**

According to this structure, by locating the upper flange **20e** at the outward offset position (toward one side of the center of gravity **Z** of the closed-cross section **7a**), an upper-side attaching member, such as the suspension housing **40,** can be attached to the upper wall portion **20a** and the upper flange **20e.** Likewise, a lower-side attaching member, such as the subframe **50,** can be attached to the lower flange **20f** by locating the lower flange **20f** at the inward offset position (toward the other side of the center of gravity **Z** of the closed-cross section **7a**).

The outer upper-wall portion **22a** of the upper wall portion **20a** which is positioned on the outward side, in the vehicle width direction, of the upper flange **20e** and the inner lower-wall portion **21b** of the lower wall portion **20b** which is positioned on the inward side of the lower flange **20f** are configured to have substantially the same plate thickness **t2** and substantially the same side lengths **L3, L4** of the closed-cross section **7a** as those of the side wall portions **21g, 22g, 21h, 22h, 25a, 26a, 25b, 26b, 25c, 26c**.

According to this structure, since the bending rigidities of the outer upper-wall portion **22a** and the inner lower-wall portion **21b** are equal to each other in addition to the bending rigidities of the side wall portions **21g, 22g, 21h, 22h, 25a, 26a, 25b, 26b, 25c, 26c,** the uniform axial-compression of the front side frame 20 can be attained properly.

The groove portions **25, 26** are configured such that the vehicle rearward-located portion thereof is deeper than the vehicle forward-located portion thereof.

According to this structure, since the moment of inertia (of area) of the rearward-located portion of the front side frame member **20** can be increased more, the rear-side portion **2d** of the front side frame **20** has the larger bending rigidity than the front-side portion **2c.** Accordingly, the front-side portion **2c** can absorb the collision load by being deformed when receiving the collision load from the vehicle front side. Further, the collision load can be received by the rear-side portion **2d** with the increased rigidity in order to achieve the secure collision-load absorption by means of the front-side portion **2c.**

The side wall portion comprises the upper side wall portions **21g, 22g** located above the groove portions **25, 26** and the lower side wall portion **21h, 22h** located below the groove portions **25, 26,** and the groove-upper wall portions **25a, 26a,** the groove-lower wall portions **25b, 26b,** the groove-bottom wall portions **25c, 26c,** the upper side wall portions **21g, 22g,** the lower side wall portions **21h, 22h,** the outer upper wall portion **22a,** and the inner lower wall portion **21b** have the same plate thicknesses **t1**, **t2** and side lengths **L3, L4, L5.**

According to this structure, the difference of the bending rigidity among the respective wall portions forming the closed-cross section **7a** is suppressed easier compared to a case where the groove-lower wall portions **25b, 26b,** the groove-bottom wall portions **25c, 26c,** the upper side wall portions **21g, 22g,** the lower side wall portions **21h, 22h,** the outer upper wall portion **22a,** and the inner lower wall portion **21b** have the different plate thicknesses and side lengths, so that the stable axial-compression of the front side frame **20** can be attained.

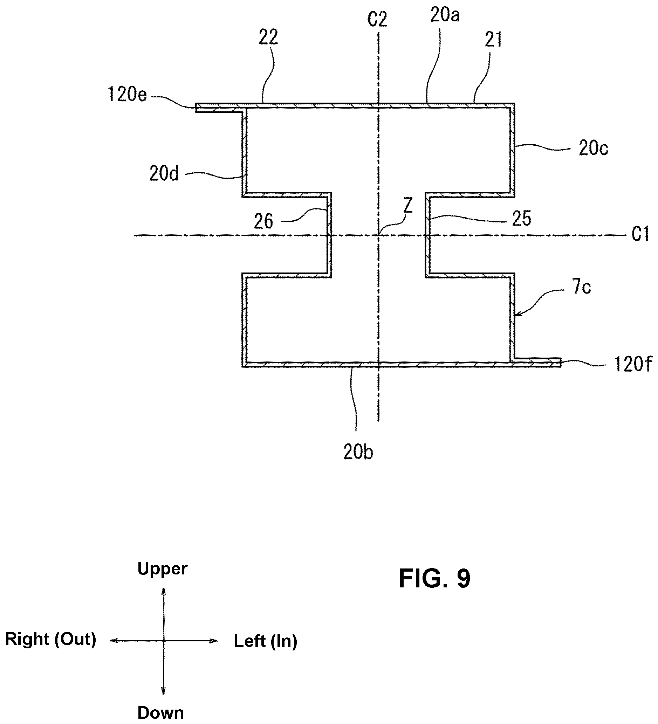

While the above-described embodiment is configured such that the flanges **20e, 20f** extend in the vertical direction from the closed-cross section **7a,** the present invention is not limited to this. The flanges **120e, 120f** may extend in the width direction from the closed-cross section **7c** as shown in FIG. **9****,** for example.

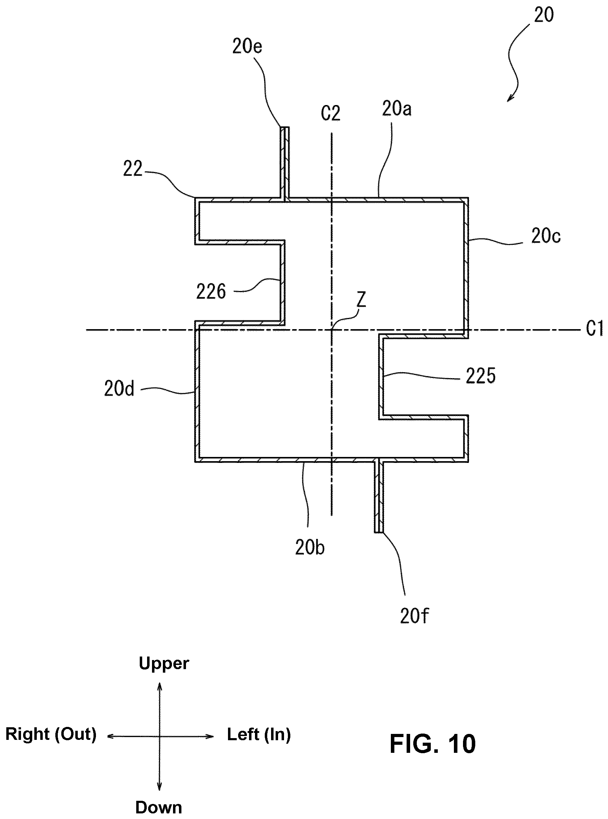

Further, while the longitudinal positions of the groove portions **25, 26** match each other in the present embodiment, the present invention is not limited to this as long as the groove portions **25, 26** are symmetrical about the point of the center of gravity **Z.** For example, as shown in FIG. **10****,** the vertical positions of the groove portions **225, 226** may be offset from each other.

Moreover, the above-described shows the structure in which the frame member comprises the inner panel **21** and the outer panel **22,** this frame member may be an extruded aluminum member or the like.

## Claims

1. A frame member for a vehicle, comprising:
a frame body portion (20A) having an upper wall portion (20a), a lower wall portion (20b), and a pair of side wall portions (20c, 20d), which together define a closed-cross section (7a) perpendicular to a longitudinal extension direction thereof in a specified longitudinal range;
a pair of groove portions (25, 26) formed at the pair of side wall portions (20c, 20d), the groove portions (25, 26) being recessed toward an inside of the closed-cross section (7a);
flanges (20e, 20f) protruding outward from the closed-cross section,
wherein each of said pair of side wall portions (20c, 20d) comprises plural side wall portions (25a, 26a, 25b, 26b, 25c, 26c) which include a groove-upper wall portion (25a, 26a) extending in a width direction at an upper side thereof, a groove-lower wall portion (25b, 26b) extending in the width direction at a lower side thereof and facing said groove-upper wall portion (25a, 26a), and a groove-bottom wall portion (25c, 26c) interconnecting said groove-upper wall portion (25a, 26a) and said groove-lower wall portion (25b, 26b) in a vertical direction.

2. The frame member of claim 1, wherein said plural side wall portions (25a, 26a, 25b, 26b, 25c, 26c) are configured to have substantially the same bending rigidity.

3. The frame member of any one of the preceding claims, wherein said plural side wall portions (25a, 26a, 25b, 26b, 25c, 26c) are configured to have substantially the same plate thickness and substantially the same side length of said closed-cross section (7a).

4. The frame member of any one of the preceding claims, wherein said closed-cross section (7a), at least in a specified longitudinal range, is symmetrical about a point of center of gravity (Z) of said closed-cross section (7a), including projection positions of said plural flanges (20e, 20f), and is nonsymmetrical about all straight lines which pass through said center of gravity (Z) of the closed-cross section (7a) and are perpendicular to the longitudinal direction.

5. The frame member of any one of the preceding claims, wherein the frame body portion (20A) is formed from an inner panel (21) and an outer panel (22), wherein the inner panel (21) forms one of the side wall portions (20c) and further comprises an inner upper-wall portion (21a) and an inner lower-wall portion (21b), wherein the outer panel (22) forms the other one of the side wall portions (20d) and further comprises an outer upper-wall portion (22a) and an outer lower-wall portion (22b), wherein the inner and outer panels (21, 22) are connected, preferably welded, together at the flanges (20e, 20f), wherein inner upper-wall portion (21a) and the outer upper-wall portion (22a) together form an upper wall portion (20a) of the closed cross-section (7a), and wherein inner lower-wall portion (21b) and the outer lower-wall portion (22b) together form an lower wall portion (20b) of the closed cross-section (7a).

6. The frame member of any one of the preceding claims, wherein said flanges (20e, 20f) comprises an upper flange (20e) protruding from said upper wall portion (20a) and a lower flange (20f) protruding from said lower wall portion (20b), the upper flange (20e) being positioned on either one side of an outward side and an inward side of center of gravity (Z) of said closed-cross section (7a), the lower flange (20f) being positioned on the other side of the outward side and the inward side of the center of gravity (Z) of said closed-cross section (7a).

7. The frame member of claim 6, wherein a one-side upper wall portion (21a, 22a) of said upper wall portion (20a), which is positioned on one side of said upper flange (20e), and an other-side lower wall portion (22b, 21b) of said lower wall portion (20b), which is positioned on the other side of said lower flange (20f), are configured to have substantially the same plate thickness and/or substantially the same side length as those of said side wall portion (20c, 20d).

8. The frame member of claim 6 or 7, wherein said side wall portion (20c, 20d) comprises an upper side wall portion (21c, 22c) located above said groove portion (25, 26) and a lower side wall portion (21h, 22h) located below said groove portion (25, 26), and said groove-upper wall portion (25a, 26a), said groove-lower wall portion (25b, 26b), said groove-bottom wall portion (25c, 26c), said upper side wall portion (21c, 22c), said lower side wall portion (21h, 22h), said one-side upper wall portion (21a, 22a), and said other-side lower wall portion (22b, 21b) are configured to have substantially the same plate thickness and/or substantially the same side length.

9. The frame member of any one of the preceding claims, wherein each of said groove portions (25, 26) has a rectangular shape with said groove-upper wall portion (25a, 26a) and said groove-lower wall portion (25b, 26b) being parallel to each other and with said groove-bottom wall portion (25c, 26c) being perpendicular to said groove-upper wall portion (25a, 26a) and said groove-lower wall portion (25b, 26b).

10. The frame of any one of the preceding claims, wherein at least one of said groove portions (25, 26) is configured such that its depth increases in the longitudinal direction.

11. A vehicle comprising a frame member (20A) according to any one of the preceding claims.

12. The vehicle of claim 11, wherein the longitudinal direction of the frame member (20A) is a front-rear direction of the vehicle, wherein a vertical direction of the frame member (20A) is an vertical direction of the vehicle, and wherein a horizontal direction of the frame member (20A) is a width direction of the vehicle.

13. The vehicle of claim 12, wherein the vehicle comprises two frame members (20A) according to any one of claim 1-10 forming a pair of front side frames (20) positioned on both-side portions, in the vehicle width direction, of an engine room (E).

14. The vehicle of claim 13, wherein suspension housings (40) are attached to the front side frames (20).

15. The vehicle of any one of claims 11-14, wherein at least one of said groove portions (25, 26) is configured such that its depth increases in the longitudinal direction such that a vehicle rearward-located portion thereof is deeper than a vehicle forward-located portion thereof.
